# EUROPEAN PATENT SPECIFICATION

(11) **EP 3 402 754 B1**
(45) Date of publication and mention of the grant of the patent: **03.06.2020**
(21) Application number: 17701247.3
(22) Date of filing: 11.01.2017
(51) Int. Cl.: C03B 23/03, F16C 13/00, F16C 13/02, F16C 17/02, C03B 11/05

(54) **HIGH TEMPERATURE HIGH LOAD COMPATIBLE BEARING**
HOCHTEMPERATUR- UND HOCHLASTKOMPATIBLES LAGER
PALIER COMPATIBLE AVEC DES TEMPÉRATURES ET CHARGES ÉLEVÉES

(30) Priority: 13.01.2016 US 201662278201 P
(43) Date of publication of application: 21.11.2018
(73) Proprietor: Corning Incorporated, Corning, New York 14831 (US)
(72) Inventor: DANNOUX, Thierry Luc Alain, 77210 Avon (FR); POISSY, Stephane, 91800 Brunoy (FR)
(74) Representative: Epping - Hermann - Fischer
(86) International application number: PCT/US2017/012898
(87) International publication number: WO 2017/123564

(56) References cited:
- EP-B1- 0 823 551
- GB-B- 2 441 651
- US-A- 5 900 034

## Description

### FIELD

The present disclosure relates to high load and high temperature compatible bearings, and, specifically, to bearing for use in the manufacturing of bent glass.

### BACKGROUND

This section provides background information related to the present disclosure which is not necessarily prior art.

Bent glass parts are used in a variety of industries including, but not limited to, auto interiors, windshields, architectural applications, handheld microelectronic devices, tablets, etc. Many automobile manufacturers are moving toward the integration of more glass in vehicles by offering various touch panels within the interior of the vehicle that can be flat or three dimensionally shaped. There is also a trend, again particularly with automobile manufacturers, to incorporate lighter and thinner material with superior mechanical strength. One example of this type of glass is Gorilla Glass (Trade Mark) which is laminated for windshields.

The process of bending glass requires high temperatures in order to reach the corresponding glass viscosity and further requires the use of high temperature compatible machines to bend and precisely control the three dimensional glass shapes. The static ovens and dynamic lehrs are used as high temperature compatible machines and reach temperatures of up to 850°C. Thus there is a need for a part that enables movement of the different mechanical parts and facilitates alignment of the mechanical parts of the static ovens and dynamic lehrs used in the glass shaping process. There can also be a need to lift glass supports in this high temperature environment.

EP 0 823 551 A2 relates to a roller bush for a fuel injection pump which is interposed between a metal roller and a pin. The roller is forced to contact with a cam reciprocating a plunger, and the pin supports the roller rotatably about a rotational axis at either axial side of the bush. Either axial end portions of the bush entirely consist of ceramic, each portions having the axial length from the corresponding axial end surface of L.

### SUMMARY

This section provides a general summary of the disclosure, and is not a comprehensive disclosure of its full scope or all of its features.

According to the claimed invention, a high load, high temperature compatible bearing assembly includes a shaft formed of refractory steel or high temperature alloy. A roller formed of refractory steel or high temperature alloy receives the shaft within a bore in the roller. At least one bearing ring formed of ceramic is disposed between the shaft and the roller. The bearing ring cooperates with the roller to permit the roller to freely rotate around the shaft.

The bearing assembly may include a shaft and roller that are formed of different refractory steels or high temperature alloys.

The bearing assembly may include refractory steels or high temperature alloys that are at least one of a 253MA, a Haynes 230, a Waspaloy, and an Inconel 617 (Trade Marks). The bearing assembly may include a ceramic bearing ring that is a zirconia bearing ring. The bearing assembly may include a roller having a cylindrical outer wall.

The bearing assembly may include a roller having a conical or V-shaped outer wall.

The bearing assembly may include a roller having at least one roller chamber for receiving the at least one bearing ring between the roller and the shaft. The at least one roller chamber may be a stepped portion in the bore of the roller having a diameter that is larger than a diameter of the bore of the roller.

The bearing assembly may include a shaft having a first diameter portion, a second diameter portion, and a third diameter portion for retaining the bearing rings within the roller. The bearing rings and roller may be disposed on the first diameter portion. The second diameter portion may be larger than the first diameter portion to prevent movement of the bearing rings and roller from sliding beyond the first diameter portion. The third diameter portion being smaller than the first diameter portion for receiving a washer and nut for retaining the bearing rings and roller on the first diameter portion.

A glass forming machine may include the bearing assembly, and the bearing assembly may align an upper mold and a lower mold of the glass forming machine.

A glass forming machine may include the bearing assembly, and the bearing assembly lifts a port or a mold in a high temperature environment.

A glass forming machine may include the bearing assembly, and the bearing assembly rotates a mechanical part or a mold or a fixture in a high temperature environment.

The bearing assembly may include a roller having a smooth outer surface.

A glass forming machine may include the bearing assembly, and the bearing assembly aligns a piece of glass with a mold at a temperature of 850 °C such that the glass is aligned with the mold portion within a tolerance of positive or negative 0.5 millimeters over a 1 meter span..

The bearing assembly may include a shaft that is formed of 253MA (Trade Mark) refractory steel, a bearing ring that is formed of zirconia, a roller that is formed of Inconel 617 (Trade Mark), and a pin that is formed of 253MA (Trade Mark) to permit free rotation of the roller around the shaft.

A glass forming machine may include the bearing assembly, and the bearing assembly receives a projection or centering pin on one of an upper mold and a lower mold of the glass forming machine to align the upper mold and the lower mold. The roller and the projection or the centering pin may be formed from different refractory steels or high temperature alloys to prevent sticking between the roller and the projection or the centering pin

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
Figures 1A-1C are perspective views of a machine used in glass shaping and a glass shaping process;
Figure 2 is a perspective view of a bearing assembly for an alignment portion of the machine in Figure 1;
Figure 3 is a section view of the bearing assembly cut at 3-3 in Figure 2;
Figure 4 is a perspective view of another embodiment of a bearing assembly that could be used in an alignment portion of Figure 1; and
Figure 5 is a section view of the bearing assembly cut at 5-5 in Figure 4.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

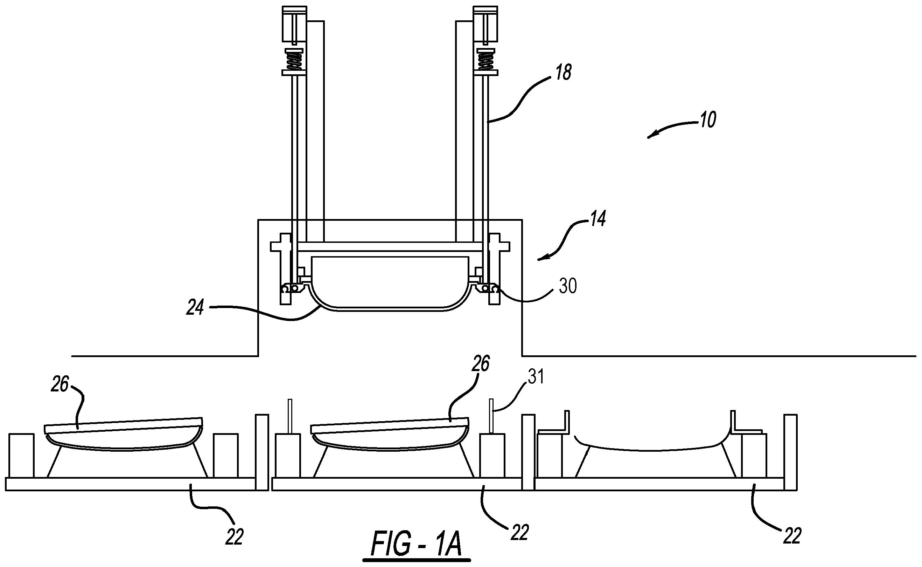

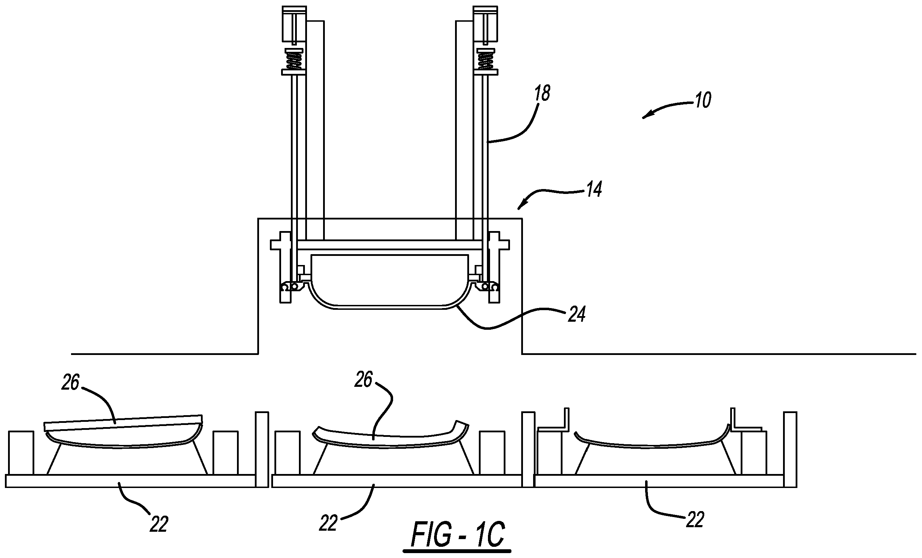

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly. A machine 10 for bending glass is illustrated in Figures 1A-1C. The machine 10 operates in a high temperature environment. For example only, the machine 10 may operate in temperatures up to 850 °C. The machine 10 incorporates a press 14 having top and bottom racks 18, 22 for precisely bending the glass into a desired shape. During the reforming process, the top and bottom racks 18, 22 either move in relative motion or the top rack 18 moves relative to the bottom rack 22. As the top and bottom racks 18, 22 move together to press the glass into the required shape, a mold 24 held within the top rack 18 must be perfectly aligned on a piece of glass 26 held by the bottom rack 22. For example only, the accuracy of the alignment between the top rack 18 and bottom rack 22 must be within positive or negative 0.5 millimeters (mm) over 1 meter (m) of glass.

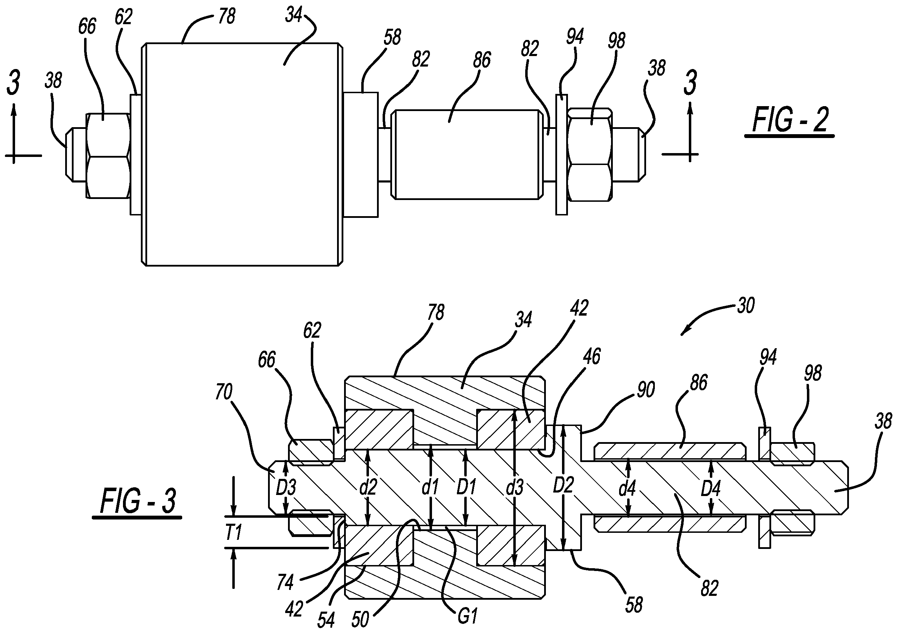

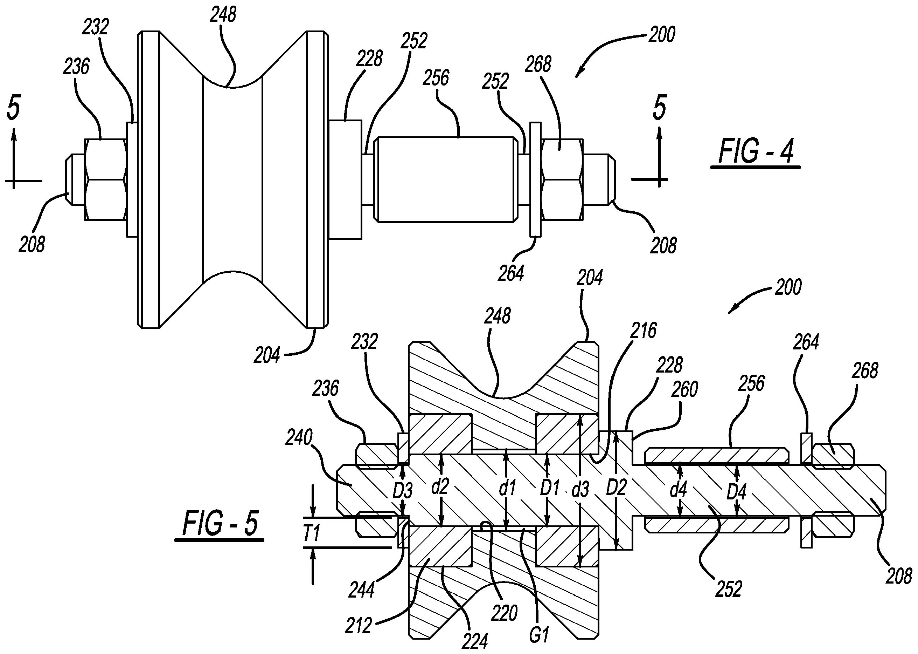

Referring additionally to Figures 2 and 4, bearing assemblies 30 are disposed in a plurality of locations around the perimeter of one of the top rack 18 and the bottom rack 22 for aligning the top rack 18 with the bottom rack 22 as the top and bottom racks 18, 22 come together during the pressing and shaping process, accurately registering the top and bottom racks 18, 22 in the final positions. For example only, the bearing assemblies 30 may receive a projection (not illustrated) positioned on an opposite top rack 18 or bottom rack 22 from the top or bottom rack 18, 22 on which the bearing assembly 30 is disposed. In other examples, the bearing assembly 30 may receive another portion of the opposite top rack 18 or bottom rack 22 from the top or bottom rack 18, 22 on which the bearing assembly 30 is disposed. For example only, bearing assemblies 30 may be positioned at a center of each side of the top rack 18, and may receive a projection (not illustrated) or portion of the bottom rack 22 positioned at a center of each side of the bottom rack 22.

In other examples, bearing assemblies 30 may only be positioned at a center of two opposing sides and may only receive the bottom rack 22 at corresponding opposing sides on the bottom rack 22 to align the bottom rack 22 with the top rack 18. While two arrangements of bearing assemblies 30 are described, it is understood that any number of bearing assemblies 30 are envisioned on the top and bottom racks 18, 22 for aligning the bottom rack 22 with the top rack 18.

Now referring to Figures 2-3, bearing assembly 30 is illustrated. Bearing assembly 30 includes one or more bearing assemblies 30 which may be spaced apart to receive the projection (not illustrated) or portion of the bottom rack 22 (not illustrated) therebetween. Bearing assembly 30 further includes a roller 34, an arbor shaft 38, and two bearing rings 42. The roller 34 and shaft 38 are both formed from a refractory alloy or high temperature alloy. The roller 34 and shaft 38 may be formed from the same or different alloys (for example only, the roller may be formed of Inconel 617 (Trade Mark) while the shaft may be formed of 253 MA steel or Haynes 230/Waspaloy (Trade Marks) or both the roller and the shaft may be formed of one of Inconel 617, 253 MA steel, or Haynes 230/Waspaloy (Trade Marks)); while the bearing rings 42 are formed of a ceramic (for example only, zirconia or zirconium dioxide). The projection (not illustrated) or portion of the bottom rack 22 (not illustrated) may also be formed of a refractory alloy such as 253MA (Trade Mark). The use of two different high temperature steels for the roller 34 and the projection (not illustrated) or portion of the bottom rack 22 (not illustrated) limits the rollers 34 sticking to the projection (not illustrated) or portion of the bottom rack 22 (not illustrated).

The use of a composite bearing having two different materials (refractory steel or high temperature alloy for the roller and shaft and zirconia for the bearing rings) presenting very different chemical families prevents high temperature degradation based on oxidation, diffusion, and electrochemical corrosion and sticking. The hard zirconia used in the bearing ring and the refractory steel or high temperature alloy used in the arbor and roller allow for manufacturing practicality and robustness of each of the parts. The use of zirconia bearing rings 42 with the refractory steel or high temperature alloy shaft 38 and roller 34 allows the bearing assembly 30 to work without the use of grease. Further, the use of a solid plain zirconia bearing ring allows the bearing ring to undertake heavy load without punctual degradation due to high Hertz pressure. For example only, with a width, diameter, and length of a few centimeters, for example within a range of 2 to 10 centimeters, a zirconia bearing assembly can withstand several hundred of kilograms. By modifying the width, diameter, and length, the design can easily be upgraded to withstand a mold weighing tons. For example only, by modifying the width, diameter, and length to be within a range of 5 to 20 centimeters, the zirconia bearing assembly can withstand up to 2 tons.

The shaft 38 is received within a bore 46 in the center of each bearing ring 42 and a bore 50 in the center of the roller 34. A diameter d1 of the bore 50 is slightly larger than a first diameter D1 of the shaft 38. A diameter d2 of the bore 46 is slightly smaller than the diameter d1 of the bore 50, allowing for a gap G1 between the shaft 38 and the bore 50. The bore 50 of the roller 34 further includes two stepped portions, or roller chambers, 54 for receiving the bearing rings 42. The stepped portions 54 have a diameter d3 that is larger than the diameter d1 for receiving the bearing rings 42 therein. For example only, the bearing rings 42 may be one or several thick zirconia bearings. Each bearing ring 42 may be within a range of 1 to 40 mm thick and 10 to 80 mm wide, and, more particularly, may be from 10 to 20 mm thick and 20 to 40 mm wide. The bearing rings 42 may be cylindrically shaped or may include a flange.

For example only, the diameter d1 of the bore 50 may be within a range of 5 to 100 mm, and more particularly, approximately 30 mm. The diameter d2 of the bore 46 may be within a range of 5 to 100 mm and more particularly, approximately 25 mm. The third diameter d3 of the stepped portion 54 may be within a range of 5 to 100 mm, and more particularly, approximately 20 mm. The first diameter D1 of the shaft 38 may be within a range of 0.5 to 2% smaller than d1, and more particularly, approximately 1% smaller than d1.

The shaft 38 may include an increased diameter portion 58 to position the bearing rings 42 and roller 34 on the shaft 38. A second diameter D2 of the shaft 38 at the increased diameter portion 58 may be larger than the first diameter D1 of the shaft 38, the diameter d1 of bore 50, and the diameter d2 of bore 46 but smaller than the diameter d3 of stepped portion 54. For example only, the second diameter D2 of the increased diameter portion 58 of the shaft 38 may be within a range of 5 to 100 mm and more particularly, approximately 35 mm.

The roller 34 and bearing rings 42 are secured on the shaft 38 by a fastener such as a washer 62 and a nut 66. While a washer 62 and nut 66 are described and illustrated, it is understood that any fastener for securing the roller 34 and bearing rings 42 on the shaft 38 may be used. The shaft 38 may also include a decreased diameter portion 70 on which the washer 62 and nut 66 are tightened. A third diameter D3 of the shaft 38 at the decreased diameter portion 70 may be less than the first diameter D1 of the shaft 38. For example only, the third diameter D3 of the shaft 38 may be within a range of 4 to 99 mm, and more particularly, approximately 20 mm. The washer 62 and nut 66 may abut a wall 74 where the shaft 38 diameter increases from the third diameter D3 to the first diameter D1. A thickness T1 of the washer 62 (Figure 5) may be greater than a difference of the first diameter D1 and the third diameter D3 (i.e., D1-D3) such that the washer 62 extends beyond the shaft 38 at the wall 74 to retain the roller 34 and bearing rings 42 in position on the shaft 38.

Roller 34 may further include a cylindrical outer wall 78 that contacts the projection (not illustrated) or portion of the bottom rack 22 (not illustrated). The roller 34 and bearing rings 42 work together to allow movement of the roller 34 with respect to the shaft 38 such that the roller 34 may freely rotate around the shaft 38 when the roller 34 contacts the projection (not illustrated) or portion of the bottom rack 22 (not illustrated). For example only, the roller 34 must freely rotate around the shaft 38 to prevent jamming of the bearing assembly 30. Since only the roller 34 rotates relative to the shaft 38 (instead of a conventional ball or roller bearing), the single rolling element allows the use of the bearing 30 in severe temperatures and clean environments.

The bearing 30 may be mounted on a bracket (not illustrated). The bracket may be a square tube. Opposing sides (for example only, front and back plates) of the bracket may receive the shaft 38 of bearing assembly 30.

The shaft 38 includes a mounting portion 82 adjacent to the increased diameter portion 58 having a fourth diameter D4 that is smaller than the first diameter D1 and second diameter D2 but is larger than the third diameter D3. For example only, the fourth diameter D4 of the mounting portion 82 may be within a range of 5 to 100 mm, and, more particularly, 20 mm. The mounting portion 82 of shaft 38 is sized to be received within or attached to the bracket (not illustrated). As such, if a larger bracket is implemented, it is understood that the fourth diameter D4 of the mounting portion 82 may be increased.

In some examples, a sleeve 86 may be disposed on the mounting portion 82 of the shaft 38 between opposing sides of the bracket (not illustrated). An inner diameter d4 of sleeve 86 is slightly larger than the fourth diameter D4 of the mounting portion 82 such that the mounting portion 82 is slideably fit within the sleeve 86. For example only, the inner diameter d4 of the sleeve 86 may be within a range of 5 to 100 mm, and, more particularly, approximately 25 mm. The sleeve 86 provides support within the bracket (not illustrated) for retaining the bearing assembly 30 and absorbing force from the bearing assembly 30 as the projection (not illustrated) or portion of the bottom rack 22 (not illustrated) contacts the roller 34 when the glass 26 is pressed.

In other examples, the bracket (not illustrated) may be a solid bracket without opposing sides. In these instances, the mounting portion 82 would be received within bores through the solid bracket. Thus, no sleeve 86 is necessary.

A wall 90 on the shaft 38 at the point where the diameter D4 of the mounting portion 82 increases to the diameter D2 of the increased diameter portion 58 prevents the shaft 38 and bearing assembly 30 from passing further into the bracket (not illustrated). A washer 94 and nut 98 prevent the shaft 38 and bearing assembly 30 from unintentionally being removed from the bracket (not illustrated) by sliding out or vibrating out. Nut 98 further limits the axial clearance to a predetermined value. For example only, the allowable axial clearance may be within a range of 0.1 to 5 mm, and, more particularly, approximately 0.5 mm.

If two bearing assemblies 30 are implemented, the shaft 38 of the bearing assemblies 30 are mounted on the bracket (not illustrated) to be spaced a predetermined length L3 apart such that the rollers 34 of the bearing assemblies 30 are spaced a predetermined length L4 apart. Length L4 is sized to receive the projection (not illustrated) or portion of the bottom rack 22 (not illustrated) between the outer walls 78 of the rollers 34, and, therefore, may be based on or equal to a diameter DP of the projection (not illustrated) or portion of the bottom rack 22 (not illustrated).

Now referring to Figures 4 and 5, bearing assembly 200 is illustrated. Bearing assembly 200 includes a conical roller 204, an arbor shaft 208, and two bearing rings 212. The roller 204 and shaft 208 are both formed from a refractory alloy (for example only, the roller may be formed of Inconel 617 (Trade Mark) while the shaft may be formed of 253 MA steel or Haynes 230/Waspaloy (Trade Marks)); while the bearing rings 212 are formed of a ceramic (for example only, zirconia or zirconium dioxide). The projection (not illustrated) or portion of the bottom rack 22 (not illustrated) may also be formed of a refractory alloy such as 253MA (Trade Mark). The use of two different high temperature steels for the roller 204 and the projection (not illustrated) or portion of the bottom rack 22 (not illustrated) limits the roller 204 sticking to the projection (not illustrated) or portion of the bottom rack 22 (not illustrated).

The use of a composite bearing having two different materials (refractory steel or high temperature alloy for the roller and shaft and zirconia for the bearing rings) presenting very different chemical families prevents high temperature degradation based on oxidation, diffusion, and electrochemical corrosion. The hard zirconia used in the bearing ring and the refractory steel or high temperature alloy used in the arbor and roller allow for manufacturing practicality and robustness of each of the parts. The use of a zirconia bearing ring 212 with the refractory steel or high temperature alloy shaft 208 and roller 204 allows the bearing assembly 200 to work without the use of grease. Further, the use of a solid plain zirconia bearing ring 212 allows the bearing ring to undertake heavy load without punctual degradation due to high Hertz pressure. For example only, with a width, diameter, and length of a few centimeters, for example within a range of 2 to 10 centimeters, a zirconia bearing assembly can widthstand several hundred of kilograms. By modifying the width, diameter, and length, the design can easily be upgraded to withstand a mold weighing tons. For example only, by modifying the width, diameter, and length to be within a range of 5 to 20 centimeters, the zirconia bearing assembly can withstand up to approximately 2 tons.

The shaft 208 is received within a bore 216 in the center of each bearing ring 212 and a bore 220 in the center of the roller 204. A diameter d1 of the bore 220 is slightly larger than a first diameter D1 of the shaft 208. A diameter d2 of the bore 216 is slightly smaller than the diameter d1 of the bore 220, allowing for a gap G1 between the shaft 208 and the bore 220. The bore 220 of the roller 204 further includes two stepped portions, or roller chambers, 224 for receiving the bearing rings 212. The stepped portions 224 have a diameter d3 that is larger than the diameter d1 for receiving the bearing rings 212 therein.

For example only, the bearing rings 212 may be one or several thick zirconia bearings. Each bearing ring 212 may be within a range of 1 to 40 mm thick and 10 to 80 mm wide, and, more particularly, may be from 10 to 20 mm thick and 20 to 40 mm wide. The bearing rings 212 may be cylindrically shaped or may include a flange.

For example only, the diameter d1 of the bore 220 may be within a range of 5 to 100 mm, and more particularly, approximately 30 mm. The diameter d2 of the bore 216 may be within a range of 5 to 100 mm and more particularly, approximately 25 mm. The third diameter d3 of the stepped portion 224 may be within a range of 5 to 100 mm, and more particularly, approximately 20 mm. The first diameter D1 of the shaft 208 may be within a range of 0.5 to 2% smaller than d1, and more particularly, approximately 1% smaller than d1.

The shaft 208 may include an increased diameter portion 228 to position the bearing rings 212 and roller 204 on the shaft 208. A second diameter D2 of the shaft 208 at the increased diameter portion 228 may be larger than the first diameter D1 of the shaft 208, the diameter d1 of bore 220, and the diameter d2 of bore 216 but smaller than the diameter d3 of stepped portion 224. For example only, the second diameter D2 of the increased diameter portion 228 of the shaft 208 may be within a range of 5 to 100 mm and more particularly, approximately 35 mm.

The roller 204 and bearing rings 212 are secured on the shaft 208 by a fastener such as a washer 232 and a nut 236. While a washer 232 and nut 236 are described and illustrated, it is understood that any fastener for securing the roller 204 and bearing rings 212 on the shaft 208 may be used. The shaft 208 may also include a decreased diameter portion 240 on which the washer 232 and nut 236 are tightened. A third diameter D3 of the shaft 208 at the decreased diameter portion 240 may be less than the first diameter D1 of the shaft 208. For example only, the third diameter D3 of the shaft 208 may be within a range of 4 to 99 mm, and more particularly, approximately 20 mm. The washer 232 and nut 236 may abut a wall 244 where the shaft 208 diameter increases from the third diameter D3 to the first diameter D1. A thickness T1 of the washer 232 (Figure 5) may be greater than a difference of the first diameter D1 and the third diameter D3 (i.e., D1-D3) such that the washer 232 extends beyond the shaft 208 at the wall 244 to retain the roller 204 and bearing rings 212 in position on the shaft 208. Roller 204 may further include a conical portion 248. The conical portion 248 may be a rounded portion, a U-shaped portion, a V-shaped portion, or a combination thereof. The conical portion 248 may include a variable diameter curve. For example only, the variable diameters of the curve of the conical portion 248 may be within a range of 5 to 100 mm, and, more particularly, within a range of 40 mm. The conical portion 248 may receive and mate with the projection (not illustrated) or portion of the bottom rack 22 (not illustrated) and may receive projections (not illustrated) or portions of the bottom rack 22 (not illustrated) of varying diameters in the variable diameter curve of the conical portion 248.

The roller 204 and bearing rings 212 work together to allow movement of the roller 204 with respect to the shaft 208 such that the roller 204 may freely rotate around the shaft 208 when the roller 204 contacts the projection (not illustrated) or portion of the bottom rack 22 (not illustrated). For example only, the roller 204 must freely rotate around the shaft 208 to prevent jamming of the bearing assembly 30. Since only the roller 204 rotates relative to the shaft 208 (instead of a conventional ball or roller bearing), the single rolling element allows the use of the bearing in severe temperatures and clean environments.

The bearing 200 may be mounted on a bracket (not illustrated). The bracket may be a square tube. Opposing sides (for example only, front and back plates) of the bracket may receive the shaft 208 of bearing assembly 200.

The shaft 208 includes a mounting portion 252 adjacent to the increased diameter portion 228 having a fourth diameter D4 that is smaller than the first diameter D1 and second diameter D2 but is larger than the third diameter D3. For example only, the fourth diameter D4 of the mounting portion 252 may be within a range of 5 to 100 mm, and, more particularly, 20 mm. The mounting portion 252 of shaft 208 is sized to be received within or attached to the bracket (not illustrated). As such, if a larger bracket is implemented, it is understood that the fourth diameter D4 of the mounting portion 252 may be increased.

In some examples, a sleeve 256 may be disposed on the mounting portion 252 of the shaft 208 between opposing sides of the bracket (not illustrated). An inner diameter d4 of sleeve 256 is slightly larger than the fourth diameter D4 of the mounting portion 252 such that the mounting portion 252 is slideably fit within the sleeve 256. For example only, the inner diameter d4 of the sleeve 256 may be within a range of 5 to 100 mm, and, more particularly, approximately 25 mm. The sleeve 256 provides support within the bracket (not illustrated) for retaining the bearing assembly 200 and absorbing force from the bearing assembly 200 as the projection (not illustrated) or portion of the bottom rack 22 (not illustrated) contacts the roller 204 when the glass 26 is pressed.

In other examples, the bracket (not illustrated) may be a solid bracket without opposing sides. In these instances, the mounting portion 252 would be received within bores through the solid bracket. Thus, no sleeve 256 is necessary.

A wall 260 at the point where the diameter D4 of the mounting portion 252 increases to the diameter D2 of the increased diameter portion 228 prevents the shaft 208 and bearing assembly 200 from passing further into the bracket (not illustrated). A washer 264 and nut 268 prevent the shaft 208 and bearing assembly 200 from unintentionally being removed from the bracket (not illustrated) by sliding out or vibrating out. Nut 268 further limits the axial clearance to a predetermined value. For example only, the allowable axial clearance may be within a range of 0.1 to 5 mm, and, more particularly, approximately 0.5 mm.

If two bearing assemblies 200 are implemented, the shaft 208 of the bearing assemblies 200are mounted on the bracket (not illustrated) to be spaced a predetermined length L1 apart such that the rollers 204 of the bearing assemblies 200 are spaced a predetermined length L2 apart. Length L2 is sized to receive the projections (not illustrated) or portions of the bottom rack 22 (not illustrated) between the conical sections 248 of the rollers 204, and, therefore, may be based on a diameter DP of the projections (not illustrated) or portions of the bottom rack 22 (not illustrated). For example only, the diameter DP of the projections (not illustrated) or portions of the bottom rack 22 (not illustrated) may be within a range of 10 to 100 mm, and, more particularly, 20 mm. Length L2 may be within a range of 5 to 400 mm, and, more particularly, 20 mm. And length L1 may be within a range of 5 to 400 mm, and, more particularly, 20 mm. However, it is understood that if the diameter DP of the projections (not illustrated) or portions of the bottom rack 22 (not illustrated) is changed, the lengths L1 and L2 may also be changed to accommodate the new diameter DP. For example only, the length L2 may be 30% of diameter DP, and length L2 may be 15% of length L1.

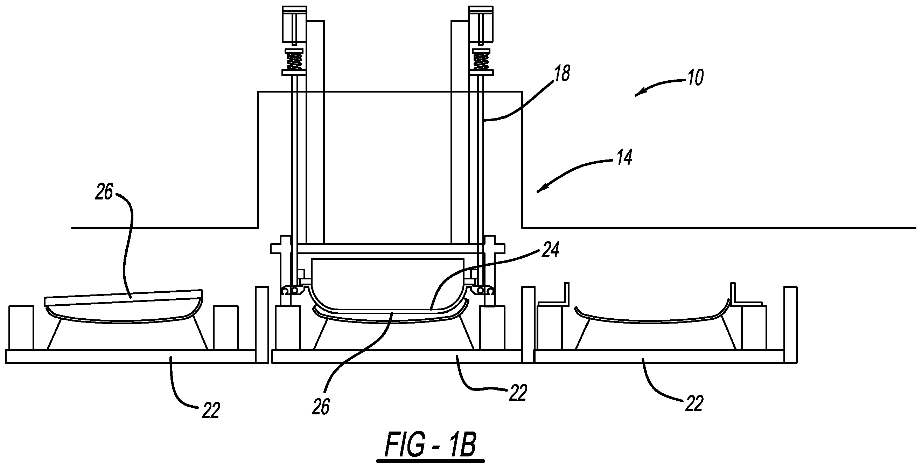

Referring additionally to Figures 1A and 1B, as the bottom rack 22 is brought together with the top rack 18 in a pressing function, the projections (not illustrated) or portions of the bottom rack 22 (not illustrated) are brought toward the bearing assemblies 30 or 200. As the top and bottom racks 18, 22 move together during the pressing function the bottom rack 22 must be perfectly aligned with the top rack 18. For example only, the accuracy of the alignment between the top rack 18 and bottom rack 22 must be within positive or negative 0.5 millimeters (mm) over 1 meter (m) of glass.

The projections (not illustrated) or portions of the bottom rack 22 (not illustrated) are generally aligned with the space between the rollers 34, 204 of the bearings 30, 200. As the top rack 18 continually moves closer to the bottom rack 22, the projection (not illustrated) or portion of the bottom rack 22 (not illustrated) is received within the space between the rollers 34, 204. The rollers 34, 204 direct the projection (not illustrated) or portion of the bottom rack 22 (not illustrated) into the space between the rollers 34, 204 by contacting the rollers 34, 204 with a side of the projection (not illustrated) or portion of the bottom rack 22 (not illustrated). The force generated between the contact of the side of the projection (not illustrated) or portion of the bottom rack 22 (not illustrated) with the rollers 34, 204 causes the rollers 34, 204 to rotate around the shaft 38, 208 and causes the bottom rack 22 to shift laterally to align with the top rack 18.

As the top rack 18 is brought toward the bottom rack 22, the rollers 34, 204 continue to align the projections (not illustrated) or portions of the bottom rack 22 (not illustrated) with the bearing assemblies 30, 200, and, thus, the bottom rack 22 is aligned with the top rack 18. The projections (not illustrated) or portions of the bottom rack 22 (not illustrated) continues to pass through the space between the rollers 34, 204 of the bearings 30, 200 until the projections (not illustrated) or portions of the bottom rack 22 (not illustrated) are entirely received within the spaces between the rollers 34, 204 of the bearings 30, 200. Throughout the time that the projections (not illustrated) or portions of the bottom rack 22 (not illustrated) pass within the spaces between the rollers 34, 204, the rollers 34, 204 freely rotate around the shafts 38, 208.

While bearing assemblies 30, 200 are illustrated and described as having two bearing rings 42, 212, a bearing assembly having a single bearing ring or three or more bearing rings is also contemplated. In these embodiments, the shaft of the bearing assemblies 30, 200 would still pass through a bore(s) in the bearing ring(s), and the bearing ring(s) would remain located within a rolling chamber in the roller. However, the fixation means for insuring the immobilization of the bearing ring(s) with respect to the roller may be different to allow a fine tuning of the rolling clearance on the arbor shaft.

There are many advantages of using the shaft 38, 208, bearing rings 42, 212, and rollers 34, 204 over conventional designs. The use of the composite bearing involving two different materials presenting very different chemical families prevents high temperature degradation based on oxidation, diffusion, and electrochemical corrosion. The solid plain zirconia bearing ring is able to undertake heavy load without punctual degradation due to high Hertz pressure. Having single rolling elements, as opposed to multiple rolling elements in conventional designs (a conventional ball or roller bearing), allow for the use of the bearing in severe temperatures and cleanliness environments. There are also many advantages to the manufacture and maintenance of the bearing assemblies 30 and 200. The use of a zirconia bearing ring and a refractory steel or high temperature alloy arbor shaft increase the ease of manufacturing and the robustness of the individual parts. The assembly and maintenance of the different parts of the composite bearing is much easier and quicker than conventional bearings due to the fewer number of parts for the bearing assemblies 30 and 200.

In the case of accidental breakage of one or more of the zirconia bearing rings, the bearing may continue working for a given time without prohibitive multiple elements dispensing in the working environment. This prevents downtime of the machine during the time between the breakage of the bearing ring and the time that a maintenance person can fix the bearing assembly. It also prevents issues with mandatory clean environments.

Further, the simplified design allows for the assembly and working clearances between the zirconia bearing rings and the arbor shaft or the roller body to be easily calculated, selected, and controlled. Optimized high temperature clearance between the various parts can also be obtained by modeling and experience.

While the bearing assemblies 30, 200 have been described for use in alignment, the bearing assemblies 30, 200 can also be used to lift a part or a glass support in a static oven or a lehr. Rollers 34, 204 with the ceramic bearing rings 42, 212 enable a smooth sliding. Additionally, the bearing assemblies 30, 200 can also be used to enable a rotation of an assembly in a very high temperature environment. Further, zirconia can also be used in high temperature sliding elements (linear - non rotational)

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways, within the scope defined only by the claims.

## Claims

1. A high load, high temperature compatible bearing assembly comprising:
a shaft (38) formed of refractory steel or high temperature alloy;
a roller (34) formed of refractory steel or high temperature alloy and receiving the shaft (38) within a bore (50) in the roller (34); and
at least one bearing ring (42) formed of ceramic and disposed between the shaft (38) and the roller (34),
wherein the bearing ring (42) cooperates with the roller (34) to permit the roller (34) to freely rotate around the shaft (38).

2. The bearing assembly of claim 1, wherein the shaft (38) and roller (34) are formed of different refractory steels or high temperature alloys.

3. The bearing assembly of claim 1, wherein the ceramic bearing ring (42) is a zirconia bearing ring (42).

4. The bearing assembly of claim 1, wherein the roller (34) includes a cylindrical outer wall (78).

5. The bearing assembly of claim 1, wherein the roller (34) includes a conical or V-shaped outer wall (78).

6. The bearing assembly of claim 1, wherein the roller (34) includes at least one roller chamber (54) for receiving the at least one bearing ring (42) between the roller (34) and the shaft (38), wherein the at least one roller chamber (54) is a stepped portion in the bore (50) of the roller (34) having a diameter that is larger than a diameter of the bore (50) of the roller (34).

7. The bearing assembly of claim 1, wherein the shaft (38) includes a first diameter portion, a second diameter portion, and a third diameter portion for retaining the bearing ring (42) within the roller (34), the bearing ring (42) and roller (34) being disposed on the first diameter portion, the second diameter portion being larger than the first diameter portion to prevent movement of the bearing ring (42) and roller (34) from the first diameter portion, and the third diameter portion being smaller than the first diameter portion for receiving a washer and nut for retaining the bearing ring (42) and roller (34) on the first diameter portion.

8. The bearing assembly of claim 1, wherein the roller (34) includes a smooth outer surface.

9. The bearing assembly of claim 1, wherein the shaft (38) is formed of 253MA refractory steel, the bearing ring (42) is formed of zirconia, and the roller (34) is formed of Inconel 617 to permit free rotation of the roller (34) around the shaft (38).

10. A glass forming machine including the bearing assembly (30, 200) of claim 1, wherein the bearing assembly aligns an upper mold and a lower mold.

11. A glass forming machine including the bearing assembly of claim 1, wherein the bearing assembly lifts a part or a mold in a high temperature environment.

12. A glass forming machine including the bearing assembly of claim 1, wherein the bearing assembly (30, 200) rotates a mechanical part or a mold or a fixture in a high temperature environment.

13. A glass forming machine including the bearing assembly of claim 1, wherein the bearing assembly (30, 200) aligns a piece of glass with a mold at a temperature of 850 °C such that the glass is aligned with the mold within a tolerance of positive or negative 0.5 millimeters over a 1 meter span.

14. A glass forming machine including bearing assembly of claim 1, wherein the bearing assembly (30, 200) receives a projection or a centering pin on one of an upper mold and a lower mold to align the upper mold and the lower mold, the roller (34) and the projection or the centering pin being formed from different refractory steels or high temperature alloys to prevent sticking between the roller (34) and the projection.

## Patentansprüche

1. Hochtemperatur- und hochlastkompatible Lagerbaugruppe, umfassend:
eine Welle (38), die aus hitzebeständigem Stahl oder einer Hochtemperaturlegierung ausgebildet ist;
eine Rolle (34), die aus hitzebeständigem Stahl oder einer Hochtemperaturlegierung ausgebildet ist und die Welle (38) in einer Bohrung (50) in der Rolle (34) aufnimmt; und
mindestens einen Lagerring (42), der aus Keramik ausgebildet und zwischen der Welle (38) und der Rolle (34) angeordnet ist,
wobei der Lagerring (42) mit der Rolle (34) zusammenwirkt, um die Rolle (34) sich frei um die Welle (38) drehen zu lassen.

2. Lagerbaugruppe nach Anspruch 1, wobei die Welle (38) und die Rolle (34) aus unterschiedlichen hitzebeständigen Stählen oder Hochtemperaturlegierungen ausgebildet sind.

3. Lagerbaugruppe nach Anspruch 1, wobei es sich bei dem keramischen Lagerring (42) um einen Zirkonoxidlagerring (42) handelt.

4. Lagerbaugruppe nach Anspruch 1, wobei die Rolle (34) eine zylindrische Außenwand (78) aufweist.

5. Lagerbaugruppe nach Anspruch 1, wobei die Rolle (34) eine konische oder V-förmige Außenwand (78) aufweist.

6. Lagerbaugruppe nach Anspruch 1, wobei die Rolle (34) mindestens eine Rollenkammer (54) zur Aufnahme des mindestens einen Lagerrings (42) zwischen der Rolle (34) und der Welle (38) aufweist, wobei es sich bei der mindestens einen Rollenkammer (54) um einen gestuften Abschnitt in der Bohrung (50) der Rolle (34) mit einem Durchmesser handelt, der größer ist als ein Durchmesser der Bohrung (50) der Rolle (34).

7. Lagerbaugruppe nach Anspruch 1, wobei die Welle (38) einen ersten Durchmesserabschnitt, einen zweiten Durchmesserabschnitt und einen dritten Durchmesserabschnitt zum Halten des Lagerrings (42) in der Rolle (34) aufweist, wobei der Lagerring (42) und die Rolle (34) am ersten Durchmesserabschnitt angeordnet sind, wobei der zweite Durchmesserabschnitt größer ist als der erste Durchmesserabschnitt, um eine Bewegung des Lagerrings (42) und der Rolle (34) aus dem ersten Durchmesserabschnitt zu verhindern, und wobei der dritte Durchmesserabschnitt kleiner ist als der erste Durchmesserabschnitt, um eine Unterlegscheibe und Mutter zum Halten des Lagerrings (42) und der Rolle (34) am ersten Durchmesserabschnitt aufzunehmen.

8. Lagerbaugruppe nach Anspruch 1, wobei die Rolle (34) eine glatte Außenfläche aufweist.

9. Lagerbaugruppe nach Anspruch 1, wobei die Welle (38) aus hitzebeständigem Stahl 253MA ausgebildet ist, der Lagerring (42) aus Zirkonoxid ausgebildet ist, und die Rolle (34) aus Inconel 617 ausgebildet ist, um eine freie Drehung der Rolle (34) um die Welle (38) zuzulassen.

10. Glasformgebungsmaschine, die Lagerbaugruppe (30, 200) nach Anspruch 1 aufweisend, wobei die Lagerbaugruppe eine obere Form und eine untere Form ausrichtet.

11. Glasformgebungsmaschine, die Lagerbaugruppe nach Anspruch 1 aufweisend, wobei die Lagerbaugruppe ein Teil oder eine Form in einer Hochtemperaturumgebung anhebt.

12. Glasformgebungsmaschine, die Lagerbaugruppe nach Anspruch 1 aufweisend, wobei die Lagerbaugruppe (30, 200) eine mechanisches Teil oder eine Form oder eine Befestigung in einer Hochtemperaturumgebung dreht.

13. Glasformgebungsmaschine, die Lagerbaugruppe nach Anspruch 1 aufweisend, wobei die Lagerbaugruppe (30, 200) ein Glasteil, it einer Form bei einer Temperatur von 850°C so uasrichtet, dass das Glas mit der Form über eine Spannweite von 1 Meter innerhalb einer Toleranz von + oder - 0,5 Millimeter ausgerichtet ist.

14. Glasformgebungsmaschine, die Lagerbaugruppe nach Anspruch 1 aufweisend, wobei die Lagerbaugruppe (30, 200) einen Vorsprung oder einen Zentrierstift an einer oberen Form oder unteren Form aufnimmt, um die obere Form und die untere Form auszurichten, wobei die Rolle (34) und der Vorsprung oder der Zentrierstift aus unterschiedlichen hitzebeständigen Stählen oder Hochtemperaturlegierungen ausgebildet sind, um ein Anhaften zwischen der Rolle (34) und dem Vorsprung zu verhindern.

## Revendications

1. Ensemble de palier compatible avec des températures et charges élevées comprenant :
un arbre (38) composé d'acier réfractaire ou d'alliage à haute température ;
un galet (34) composé d'acier réfractaire ou d'alliage à haute température et recevant l'arbre (38) à l'intérieur d'un alésage (50) dans le galet (34) ; et
au moins une bague de palier (42) composée de céramique et disposée entre l'arbre (38) et le galet (34),
sachant que la bague de palier (42) interagit avec le galet (34) pour permettre au galet (34) de tourner librement autour de l'arbre (38).

2. L'ensemble de palier de la revendication 1, sachant que l'arbre (38) et le galet (34) sont composés d'aciers réfractaires ou d'alliages à haute température différents.

3. L'ensemble de palier de la revendication 1, sachant que la bague de palier (42) en céramique est une bague de palier (42) en zircone.

4. L'ensemble de palier de la revendication 1, sachant que le galet (34) inclut une paroi extérieure (78) cylindrique.

5. L'ensemble de palier de la revendication 1, sachant que le galet (34) inclut une paroi extérieure (78) conique ou en forme de V.

6. L'ensemble de palier de la revendication 1, sachant que le galet (34) inclut au moins une chambre de galet (54) destinée à recevoir l'au moins une bague de palier (42) entre le galet (34) et l'arbre (38), sachant que l'au moins une chambre de galet (54) est une partie étagée dans l'alésage (50) du galet (34) ayant un diamètre qui est plus grand qu'un diamètre de l'alésage (50) du galet (34).

7. L'ensemble de palier de la revendication 1, sachant que l'arbre (38) inclut une partie de premier diamètre, une partie de deuxième diamètre, et une partie de troisième diamètre destinée à retenir la bague de palier (42) à l'intérieur du galet (34), la bague de palier (42) et le galet (34) étant disposés sur la partie de premier diamètre, la partie de deuxième diamètre étant plus grande que la partie de premier diamètre pour empêcher un mouvement de la bague de palier (42) et du galet (34) par rapport à la partie de premier diamètre, et la partie de troisième diamètre étant plus petite que la partie de premier diamètre pour recevoir une rondelle et un écrou pour retenir la bague de palier (42) et le galet (34) sur la partie de premier diamètre.

8. L'ensemble de palier de la revendication 1, sachant que le galet (34) inclut une surface extérieure lisse.

9. L'ensemble de palier de la revendication 1, sachant que l'arbre (38) est composé d'acier réfractaire 253MA, la bague de palier (42) est composée de zircone, et le galet (34) est composé d'Inconel 617 pour permettre la libre rotation du galet (34) autour de l'arbre (38).

10. Machine de formation de verre incluant l'ensemble de palier (30, 200) de la revendication 1, sachant que l'ensemble de palier aligne un moule supérieur et un moule inférieur.

11. Machine de formation de verre incluant l'ensemble de palier de la revendication 1, sachant que l'ensemble de palier soulève une pièce ou un moule dans un environnement à haute température.

12. Machine de formation de verre incluant l'ensemble de palier de la revendication 1, sachant que l'ensemble de palier (30, 200) fait tourner une pièce mécanique ou un moule ou une fixation dans un environnement à haute température.

13. Machine de formation de verre incluant l'ensemble de palier de la revendication 1, sachant que l'ensemble de palier (30, 200) aligne un élément de verre avec un moule à une température de 850 °C de sorte que le verre soit aligné avec le moule dans une tolérance de + ou - 0,5 millimètre sur une envergure de 1 mètre.

14. Machine de formation de verre incluant l'ensemble de palier de la revendication 1, sachant que l'ensemble de palier (30, 200) reçoit une protubérance ou un pion de centrage sur l'un d'un moule supérieur et d'un moule inférieur pour aligner le moule supérieur et le moule inférieur, le galet (34) et la protubérance ou le pion de centrage étant composés d'aciers réfractaires ou d'alliages à haute température différents pour empêcher le collage entre le galet (34) et la protubérance.
